# EUROPEAN PATENT SPECIFICATION

(11) **EP 4 364 311 B1**
(45) Date of publication and mention of the grant of the patent: **30.07.2025**
(21) Application number: 22744911.3
(22) Date of filing: 28.06.2022
(51) Int. Cl.: H04B 7/06, H04B 7/08, H04W 72/04

(54) **METHOD AND APPARATUS FOR DATA-DRIVEN BEAM ESTABLISHMENT IN HIGHER FREQUENCY BANDS**
VERFAHREN UND APPARAT FÜR DATENGETRIEBENE STRAHLERSTELLUNG IN HÖHEREN FREQUENZBÄNDERN
PROCÉDÉ ET APPAREIL POUR L'ÉTABLISSEMENT, GUIDÉ PAR LES DONNÉES, DE FAISCEAU DANS DES BANDES DE FRÉQUENCE SUPÉRIEURES

(30) Priority: 28.06.2021 US 202163215554 P
(43) Date of publication of application: 08.05.2024
(73) Proprietor: InterDigital Patent Holdings, Inc., Wilmington, DE 19809 (US)
(72) Inventor: KATLA, Satyanarayana, London Greater London EC2A 3QR (GB); SAHIN, Onur, London Greater London N1 5QL (GB); NARAYANAN THANGARAJ, Yugeswar Deenoo, Conshohocken, Pennsylvania 19428 (US); PELLETIER, Ghyslain, Montreal, Québec H3A 3G4 (CA)
(74) Representative: Rittner, Karsten
(86) International application number: PCT/US2022/035212
(87) International publication number: WO 2023/278374

(56) References cited:
- MA KE ET AL: "Deep Learning Assisted mmWave Beam Prediction with Prior Low-frequency Information", ICC 2021 - IEEE INTERNATIONAL CONFERENCE ON COMMUNICATIONS, IEEE, 14 June 2021 (2021-06-14), pages 1 - 6, XP033953540, DOI: 10.1109/ICC42927.2021.9500788
- NITSCHE THOMAS ET AL: "Steering with eyes closed: Mm-Wave beam steering without in-band measurement", 2015 IEEE CONFERENCE ON COMPUTER COMMUNICATIONS (INFOCOM), IEEE, 26 April 2015 (2015-04-26), pages 2416 - 2424, XP033208520, DOI: 10.1109/INFOCOM.2015.7218630
- SIM MIN SOO ET AL: "Deep Learning-Based mmWave Beam Selection for 5G NR/6G With Sub-6 GHz Channel Information: Algorithms and Prototype Validation", IEEE ACCESS, IEEE, USA, vol. 8, 11 March 2020 (2020-03-11), pages 51634 - 51646, XP011779891, DOI: 10.1109/ACCESS.2020.2980285
- KAYA ALIYE OZGE ET AL: "Deep Learning-based Predictive Beam Management for 5G mmWave Systems", 2021 IEEE WIRELESS COMMUNICATIONS AND NETWORKING CONFERENCE (WCNC), IEEE, 29 March 2021 (2021-03-29), pages 1 - 7, XP033909374, DOI: 10.1109/WCNC49053.2021.9417452
- SAMSUNG: "Additional enhancements for multi-beam", vol. RAN WG1, no. e-Meeting; 20210125 - 20210205, 18 January 2021 (2021-01-18), XP051971407, Retrieved from the Internet <URL:https://ftp.3gpp.org/tsg_ran/WG1_RL1/TSGR1_104-e/Docs/R1-2101193.zip R1-2101193 Additional enhancements for multi-beam Final.docx> [retrieved on 20210118]

## Description

### CROSS REFERENCE TO RELATED APPLICATIONS

This application claims the benefit of US provisional patent application No. 63/215,554 filed 28 June 2021.

### BACKGROUND

The addition of beamforming to mobile telephony offers the possibility of enhanced connectivity with high signal strength along with high directivity. The selection of an uplink and downlink beam, or beams to use between two points in a mobile setting can be challenging based on the frequencies and mobility of the units at both end-points. The disclosure herein introduces concepts for mobile telephony as well as solutions to problems occurring in beamforming at high (THz) frequencies with mobile units.

### SUMMARY

A method performed by a base station, the method comprising:
receiving, from a wireless transmit receive unit (WTRU) via a communication in a first frequency band, channel state information, CSI, location information, and mobility information;
determining beam pair prediction information including one or more beam pair information to establish a communication in a second frequency band between the base station and the WTRU based on the received information, wherein the communication in the second frequency band occurs at a higher frequency band than the communication in the first frequency band, transmitting, to the WTRU in the first frequency band, configuration information relating to the beam pair prediction information for communication in the second frequency band, transmitting, in the second frequency band, at least one synchronization signal block (SSB) according to the beam pair prediction information, receiving feedback from the WTRU, and performing one of transmitting an acknowledge to the WTRU or updating the beam pair prediction information based on the feedback.

Although various embodiments are described and/or claimed herein in which an apparatus, system, device, etc. and/or any element thereof carries out an operation, process, algorithm, function, etc. and/or any portion thereof, it is be understood that any embodiments described and/or claimed herein assume that any apparatus, system, device, etc. and/or any element thereof is configured to carry out any operation, process, algorithm, function, etc. and/or any portion thereof.

### BRIEF DESCRIPTION OF THE DRAWINGS

A more detailed understanding may be had from the detailed description below, given by way of example in conjunction with drawings appended hereto. Figures in such drawings, like the detailed description, are examples. As such, the Figures (FIGs.) and the detailed description are not to be considered limiting, and other equally effective examples are possible and likely. Furthermore, like reference numerals ("ref.") in the FIGs. indicate like elements, and wherein:
FIG. 1A is a system diagram illustrating an example communications system;
FIG. 1B is a system diagram illustrating an example wireless transmit/receive unit (WTRU) that may be used within the communications system illustrated in FIG. 1A;
FIG. 1C is a system diagram illustrating an example radio access network (RAN) and an example core network (CN) that may be used within the communications system illustrated in FIG. 1A;
FIG. 1D is a system diagram illustrating a further example RAN and a further example CN that may be used within the communications system illustrated in FIG. 1A;
FIG. 2 depicts beam pairs in a downlink direction;
FIG. 3 depicts a plurality of SSBs transmitted in a burst period;
FIG. 4 depicts a typical SSB block structure;
FIG. 5 depicts steps in a data-driven beam establishment for a THz system according to aspects of the disclosure;
FIG. 6 depicts an example beam establishment method from a gNB perspective;
FIG. 7 depicts an example beam establishment method from a UE/WTRU perspective;
FIG. 8 depicts a signaling diagram of an example beam establishment method;
FIG. 9 depicts steps in a data-driven beam tracking/refinement method for a THz system according to aspects of the disclosure;
FIG. 10 depicts an example beam tracking/refinement method from a gNB perspective;
FIG. 11 depicts an example beam tracking/refinement method from a UE/WTRU perspective; and
FIG. 12 depicts a signaling diagram of an example beam tracking/refinement method.

### DETAILED DESCRIPTION

In the following detailed description, numerous specific details are set forth to provide a thorough understanding of embodiments and/or examples disclosed herein. However, it will be understood that such embodiments and examples may be practiced without some or all of the specific details set forth herein. In other instances, well-known methods, procedures, components and circuits have not been described in detail, so as not to obscure the following description. Further, embodiments and examples not specifically described herein may be practiced in lieu of, or in combination with, the embodiments and other examples described, disclosed or otherwise provided explicitly, implicitly and/or inherently (collectively "provided") herein. Although various embodiments are described and/or claimed herein in which an apparatus, system, device, etc. and/or any element thereof carries out an operation, process, algorithm, function, etc. and/or any portion thereof, it is to be understood that any embodiments described and/or claimed herein assume that any apparatus, system, device, etc. and/or any element thereof is configured to carry out any operation, process, algorithm, function, etc. and/or any portion thereof.

### Example Communications System

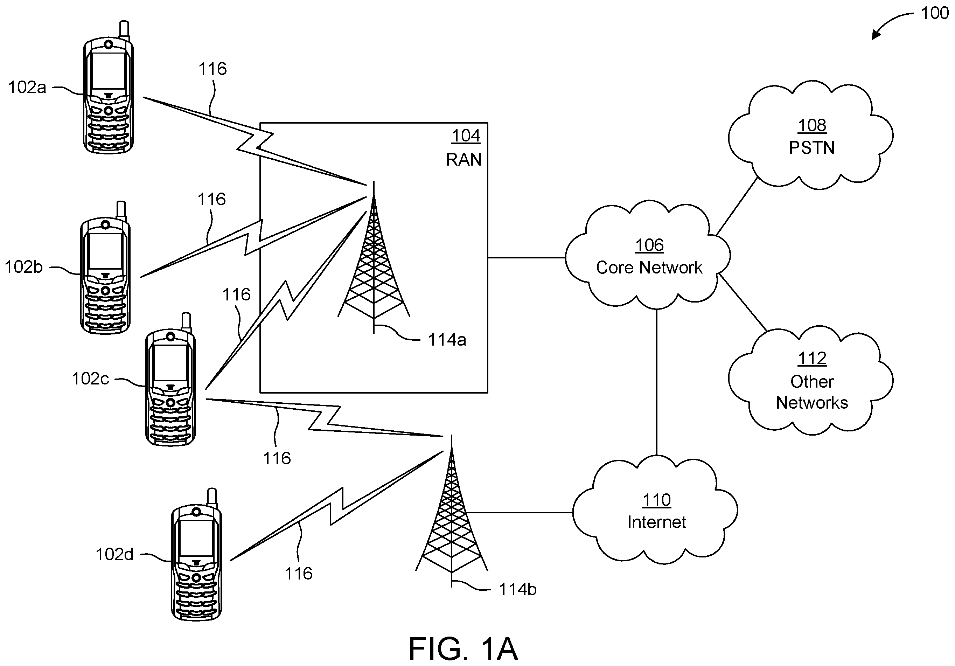

The methods, apparatuses and systems provided herein are well-suited for communications involving both wired and wireless networks. An overview of various types of wireless devices and infrastructure is provided with respect to FIGs. 1A-1D, where various elements of the network may utilize, perform, be arranged in accordance with and/or be adapted and/or configured for the methods, apparatuses and systems provided herein.

FIG. 1A is a system diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail (ZT) unique-word (UW) discreet Fourier transform (DFT) spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a radio access network (RAN) 104/113, a core network (CN) 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include (or be) a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d, e.g., to facilitate access to one or more communication networks, such as the CN 106/115, the Internet 110, and/or the networks 112. By way of example, the base stations 114a, 114b may be any of a base transceiver station (BTS), a Node-B (NB), an eNode-B (eNB), a Home Node-B (HNB), a Home eNode-B (HeNB), a gNode-B (gNB), a NR Node-B (NR NB), a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in an embodiment, the base station 114a may include three transceivers, i.e., one for each sector of the cell. In an embodiment, the base station 114a may employ multiple-input multiple output (MIMO) technology and may utilize multiple transceivers for each or any sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access, which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., an eNB and a gNB).

In an embodiment, the base station 114a and the WTRUs 102a, 102b, 102c may implement radio technologies such as IEEE 802.11 (i.e., Wireless Fidelity (Wi-Fi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node-B, Home eNode-B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In an embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In an embodiment, the base station 114b and the WTRUs 102c, 102d may utilize a cellular-based RAT (e.g., WCDMA, CDMA2000, GSM, LTE, LTE-A, LTE-A Pro, NR, etc.) to establish any of a small cell, picocell or femtocell. As shown in FIG. 1A, the base station 114b may have a direct connection to the Internet 110. Thus, the base station 114b may not be required to access the Intemet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing an NR radio technology, the CN 106/115 may also be in communication with another RAN (not shown) employing any of a GSM, UMTS, CDMA 2000, WiMAX, E-UTRA, or Wi-Fi radio technology.

The CN 106/115 may also serve as a gateway for the WTRUs 102a, 102b, 102c, 102d to access the PSTN 108, the Internet 110, and/or other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/114 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

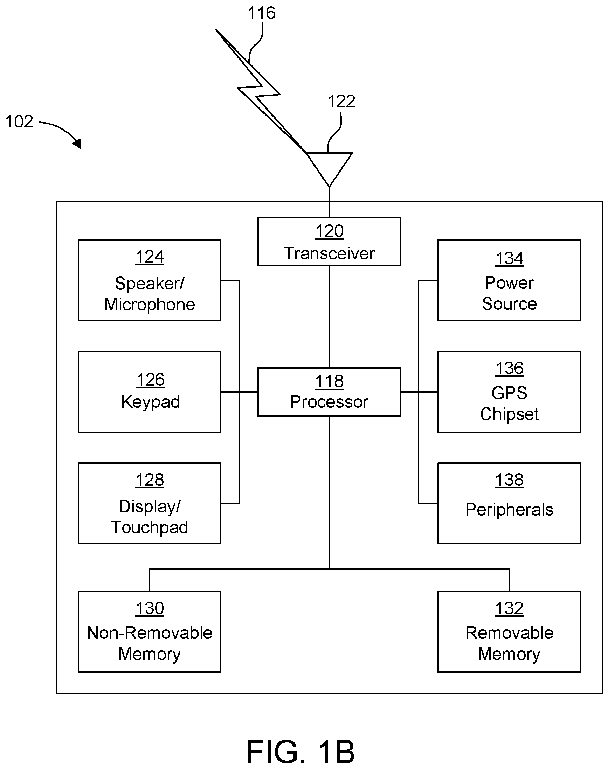

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other elements/peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together, e.g., in an electronic package or chip.

The transmit/receive element 122 may be configured to transmit signals to, or receive signals from, a base station (e.g., the base station 114a) over the air interface 116. For example, in an embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In an embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. For example, the WTRU 102 may employ MIMO technology. Thus, in an embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other elements/peripherals 138, which may include one or more software and/or hardware modules/units that provide additional features, functionality and/or wired or wireless connectivity. For example, the elements/peripherals 138 may include an accelerometer, an e-compass, a satellite transceiver, a digital camera (e.g., for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a virtual reality and/or augmented reality (VR/AR) device, an activity tracker, and the like. The elements/peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the uplink (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WTRU 102 may include a half-duplex radio for which transmission and reception of some or all of the signals (e.g., associated with particular subframes for either the uplink (e.g., for transmission) or the downlink (e.g., for reception)).

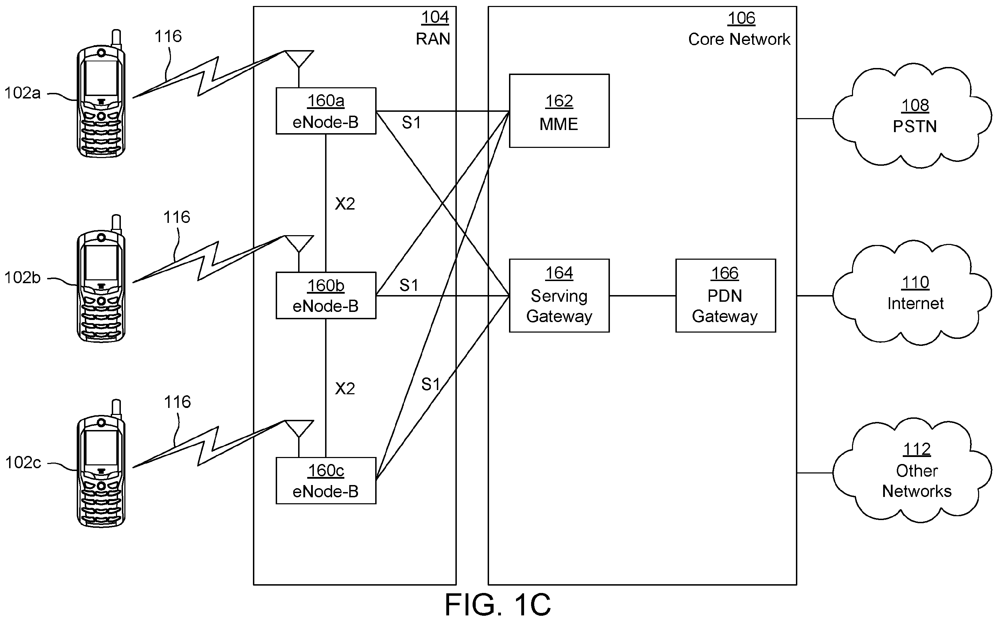

FIG. 1C is a system diagram illustrating the RAN 104 and the CN 106 according to an embodiment. As noted above, the RAN 104 may employ an E-UTRA radio technology to communicate with the WTRUs 102a, 102b, and 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In an embodiment, the eNode-Bs 160a, 160b, 160c may implement MIMO technology. Thus, the eNode-B 160a, for example, may use multiple antennas to transmit wireless signals to, and receive wireless signals from, the WTRU 102a.

Each of the eNode-Bs 160a, 160b, and 160c may be associated with a particular cell (not shown) and may be configured to handle radio resource management decisions, handover decisions, scheduling of users in the uplink (UL) and/or downlink (DL), and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (PGW) 166. While each of the foregoing elements are depicted as part of the CN 106, it will be appreciated that any one of these elements may be owned and/or operated by an entity other than the CN operator.

The MME 162 may be connected to each of the eNode-Bs 160a, 160b, and 160c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode-Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode-B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGs. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in infrastructure basic service set (BSS) mode may have an access point (AP) for the BSS and one or more stations (STAs) associated with the AP. The AP may have an access or an interface to a distribution system (DS) or another type of wired/wireless network that carries traffic into and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier sense multiple access with collision avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High throughput (HT) STAs may use a 40 MHz wide channel for communication, for example, via a combination of the primary 20 MHz channel with an adjacent or nonadjacent 20 MHz channel to form a 40 MHz wide channel.

Very high throughput (VHT) STAs may support 20 MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse fast Fourier transform (IFFT) processing, and time domain processing, may be done on each stream separately. The streams may be mapped on to the two 80 MHz channels, and the data may be transmitted by a transmitting STA. At the receiver of the receiving STA, the above-described operation for the 80+80 configuration may be reversed, and the combined data may be sent to a medium access control (MAC) layer, entity, etc.

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz and 20 MHz bandwidths in the TV white space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support meter type control/machine-type communications (MTC), such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or network allocation vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

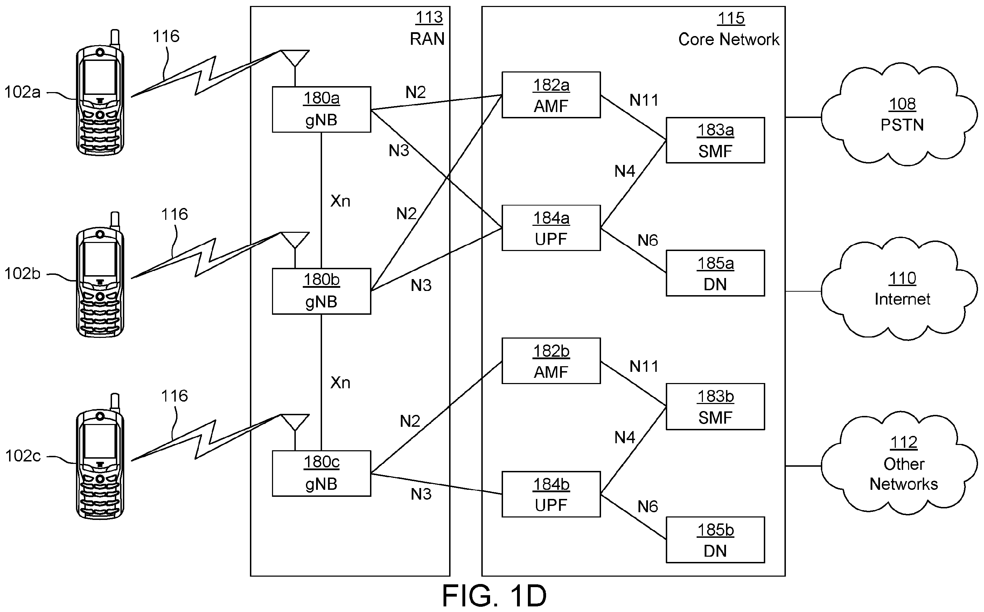

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In an embodiment, the gNBs 180a, 180b, 180c may implement MIMO technology. For example, gNBs 180a, 180b may utilize beamforming to transmit signals to and/or receive signals from the WTRUs 102a, 102b, 102c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., including a varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the uplink (UL) and/or downlink (DL), support of network slicing, dual connectivity, interworking between NR and E-UTRA, routing of user plane data towards user plane functions (UPFs) 184a, 184b, routing of control plane information towards access and mobility management functions (AMFs) 182a, 182b, and the like. As shown in FIG. 1D, the gNBs 180a, 180b, 180c may communicate with one another over an Xn interface.

The CN 115 shown in FIG. 1D may include at least one AMF 182a, 182b, at least one UPF 184a, 184b, at least one session management function (SMF) 183a, 183b, and at least one Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different protocol data unit (PDU) sessions with different requirements), selecting a particular SMF 183a, 183b, management of the registration area, termination of NAS signaling, mobility management, and the like. Network slicing may be used by the AMF 182a, 182b, e.g., to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for MTC access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as Wi-Fi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, e.g., to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In an embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the DN 185a, 185b.

In view of FIGs. 1A-1D, and the corresponding description of FIGs. 1A-1D, one or more, or all, of the functions described herein with regard to any of: WTRUs 102a-d, base stations 114a-b, eNode-Bs 160a-c, MME 162, SGW 164, PGW 166, gNBs 180a-c, AMFs 182a-b, UPFs 184a-b, SMFs 183a-b, DNs 185a-b, and/or any other element(s)/device(s) described herein, may be performed by one or more emulation elements/devices (not shown). The emulation devices may be one or more devices configured to emulate one or more, or all, of the functions described herein. For example, the emulation devices may be used to test other devices and/or to simulate network and/or WTRU functions. As explained herein, a wireless transmit/receive unit (WTRU) may be an example of a user equipment (UE). Hence the terms UE and WTRU and the notation WTRU/UE may be used with equal scope herein.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

### Beamforming Overview

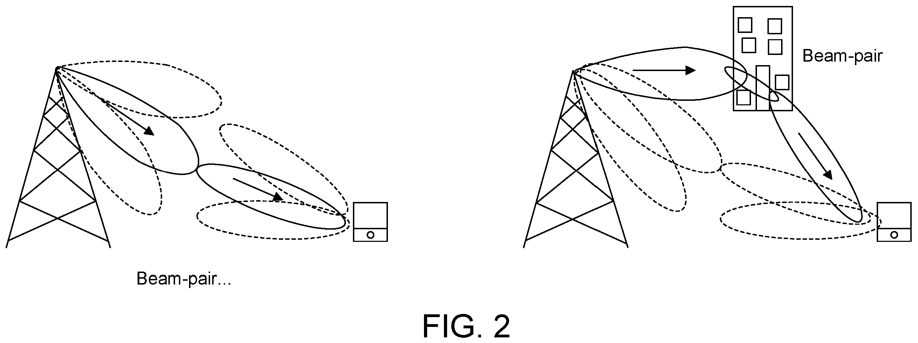

Due to high propagation losses at higher frequencies, i.e. millimeter Wave (mmW) or terahertz (THz) bands, a large number of closely-spaced antenna elements may be mounted at both a base station, such as a gNB, as well as at the UE, where the antenna processing can include analog domain beamforming. As illustrated in FIG. 2, the best beam pair may not necessarily correspond to transmitter and receiver beams that are physically pointing directly towards each other, such as in line-of-sight (LOS) setting. For instance, due to scattering/reflections in the surrounding environment, such a LOS path between the transmitter and receiver may be blocked and a reflected path may provide better connectivity, as illustrated in the right-hand part of FIG. 2 This is even more critical for operation in higher-frequency bands due to their "around-the-corner" dispersion.

In this scenario, and in mmW/THz bands in general, having beam-management functionality which enables or retains a suitable beam pair at the transmitter/receiver becomes crucial. In majority of cases, once a suitable transmitter/receiver beam pair is found for, say, downlink transmission direction, it can also be a suitable beam pair for the uplink transmission direction and vice versa. In 3GPP this is referred to as (downlink/uplink) beam correspondence. Thus, in the case of beam correspondence, it is sufficient to explicitly determine a suitable beam pair in one of the transmission directions, while the same beam-pair can also be used also in the opposite transmission direction.

The concept of beam correspondence is also equally applicable for frequency division duplex (FDD) systems where the uplink and downlink spectrum pairs do not necessarily have the same carrier frequency. More explicitly, the beam correspondence holds even if uplink and downlink operate on different carrier frequencies in the paired spectrum.

Typically, the beam management consists of the following stages:
a. Initial beam establishment (also referred to as beam establishment)
b. Beam adjustment, primarily to compensate for movements and rotations of the mobile device, but also for gradual changes in the environment;
c. Beam recovery to handle the situation when rapid changes in the environment disrupt the current beam pair.

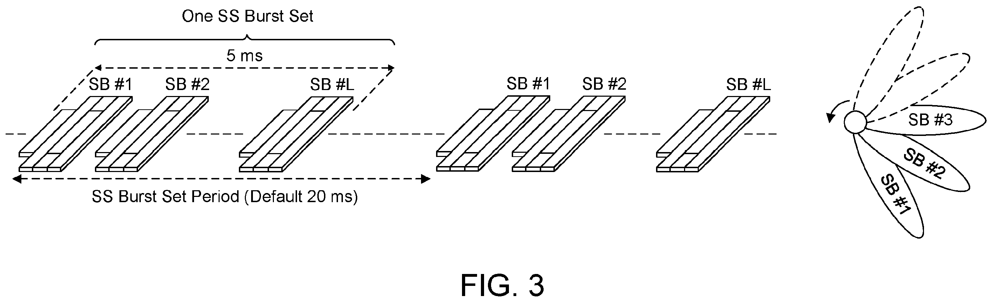

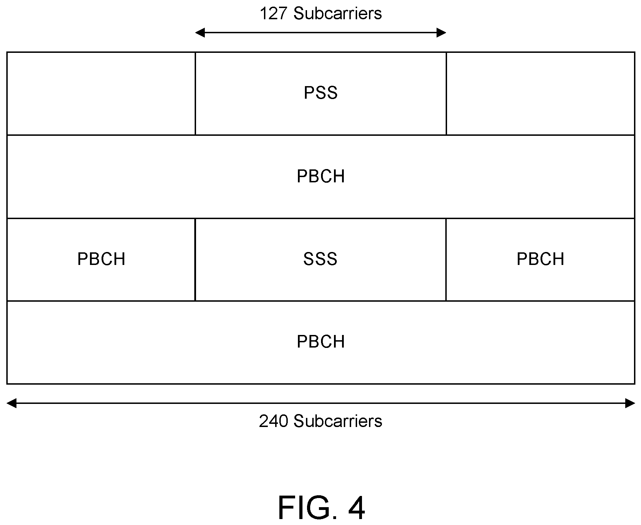

Hereinbelow, the term gNB is used as a specific example of a base station. As expressed hereinabove, a base station (BS) may be a transceiver station (BTS), a Node-B (NB), an eNode-B (eNB), a Home Node-B (HNB), a Home eNode-B (HeNB), a gNode-B (gNB), a NR Node-B (NR NB), a site controller, an access point (AP), a wireless router, and the like. One of skill in that will recognize that the example gNB used hereinbelow is just one example of a base station in a network and that the specific example of a gNB used hereinbelow represents just one example of a base station. In this disclosure, a focus is placed on the beam establishment as well as the beam adjustment stages of the beam management. Beam establishment includes the procedures and functions by which a beam pair is initially established in the downlink and uplink transmission directions, for example, when a connection is established. During the beam establishment/cell search, a UE (also known as a WTRU) can acquire a so-called synchronization signal block (SSB) transmitted by a base station, such as a gNB, in that specific cell. In NR, the gNB transmits a plurality of beamformed SSBs, each in different direction as shown in FIG. 3, showing synchronization signal (SS) and synchronization blocks (SB)s. The number of SSBs is equal to the number of beams/directions which is dependent on the operating band, while the duration of SSBs is subcarrier spacing dependent. A typical SSB is shown in FIG. 4 showing primary synchronization signal (PSS), and secondary synchronization signal (SSS) subcarriers in relation to the physical broadcast channel (PBCH)s.

By acquiring each such SSB in different directions, the WTRU measures the L1 reference signal received power, abbreviated as L1-RSRP, and decides on the best SSB. Then subsequently the WTRU utilizes a corresponding random-access occasion e.g. a physical random-access channel (PRACH)) and preamble, where the uplink random-access transmission can be used by the network to identify the downlink beam acquired by the WTRU, thereby establishing an initial beam pair. The same beam pair can also be used for uplink transmission.

Once an initial beam pair is established, there is a requirement to regularly reevaluate/monitor the selection of transmitter-side and receiver-side beam directions due to movements and rotations of the mobile device. Furthermore, even for stationary devices, movements of other objects in the environment may block or unblock different beam pairs, implying a possible need to reevaluate the selected beam directions. This beam adjustment may also include refining the beam shape, for instance making the beam narrower compared to a relatively wider beam used for initial beam establishment.

Typically, beamforming involves beam pairs consisting of transmitter-side beamforming and receiver-side beamforming. The beam adjustment may include two stages:
a. Revaluation and possible adjustment of the transmitter-side beam direction given the current receiver-side beam direction;
b. Revaluation and possible adjustment of the receiver-side beam direction given the current transmitter-side beam direction.

The following are example technical shortcomings and challenges that the state-of-the-art beam establishment and tracking procedures experience due to the rapid channel dynamics which are prevalent in particular in higher spectrum bands.
1. The pencil-like narrow beams based directional transmission at THz frequencies would impose significant overhead in terms of latency for beam alignment, since the search complexity involved in identifying a beam with high L1-RSRP would be high. Typically, the latency would be on the order of a few seconds that rely on the state-of-the-art beamforming procedures.
2. The beam refinement operations using channel state information - reference signal (CSI-RS) in the DL and sounding reference signal (SRS) in the UL to update the connection via the strongest selected beam would also add significant overheard, as it involves selecting the best beam from a large pool of beam directions.
3. The rapid channel dynamics in THz bands might further alter or degrade the conventional beamforming and beam alignment procedures considering the latency involved with these procedures.

Detailed methods for beam establishment and beam tracking procedures that overcome the above-mentioned example technical shortcomings are proposed below.

The proposed techniques allow the base station (BS) and WTRU to identify the optimal beam pair, i.e. the beam pair having high L1-RSRP, with low latency by circumventing the exhaustive search. More explicitly, in this disclosure a data-driven based beam establishment and beam tracking procedures for THz frequencies are proposed. The solutions include (i) Data-driven beam establishment for THz systems, and (ii) Data-driven beam tracking/refinement procedures using CSI-RS in DL and SRS in UL.

### Data-driven beam establishment procedures for higher frequency bands - mmW/THz systems

A data-driven beam establishment for THz systems is proposed that exploits the spatial signatures of lower frequencies (e.g. mmWave/LTE) as well as WTRU's mobility information. This is achieved by exploiting the functional mapping between the spatial signatures such as CSI, location as well as mobility of lower frequencies and potential beam pairs at THz frequencies. In an option, the functional mapping can be obtained offline using training dataset, which may be obtained by simulation/real-time data samples. The functional mapping between the signatures of lower and higher frequencies could be achieved using different methods such as analytical tools that are used to identify correlation in between or by machine learning based solutions (e.g. deep reinforcement learning) that leverage these interdependencies. The method of exploiting the spatial signatures of lower frequency for beam alignment would reduce the latency for beam establishment.

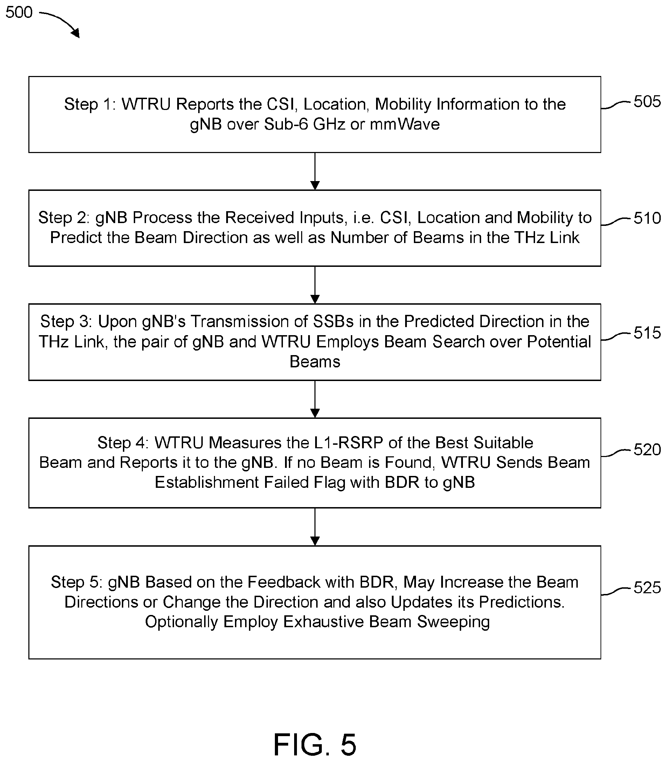

More explicitly, in real time, the spatial signatures (e.g. CSI, mobility, location information) are acquired by the gNB in the UL, where WTRU transmits SRS for CSI estimation at the gNB and the mobility information (e.g. location, velocity) as data. The WTRU may receive signaling (e.g., L3 Radio Resource Control (L3/RRC), L2 Medium Access Control (L2/MAC) or L1 / Physical Downlink Control Channel (L1/PDCCH)) that configures and/or activates uplink transmissions of feedback that may include at least one of CSI, location and/or mobility information. However, employing this procedure in real time involves learning the function that maps the spatial signatures to beam pairs, which may be carried out offline. A flowchart of the steps involved in the proposed data-driven beam establishment design is shown in FIG. 5.

In the method 500 of FIG. 5 at 505 Step 1, the WTRU reports CSI (e.g. signal to noise (SNR) values, full channel matrix, channel quality information (CQI)), location (may include 3-D position, different granularities) and mobility information (speed, may include 3-D direction) to gNB (an example of a base station) over sub- 6 GHz or mmWave. The information such as CSI, location and mobility (with speed) are used to exploit the spatial signatures of lower frequency to find the equivalent mapping in the higher frequency. The location information (may include 3-D positioning information) is useful for gNB to select interference-free beam pair. The location information can be chosen based on the required granularity, while mobility (may include 3-D direction and speed) can be used to combat the channel aging. More explicitly, the rationale for including location and mobility information in conjunction with CSI is that they can be used for predicting the beam that is free of interference from other users as well as the predicted beam is not outdated.

In FIG. 5 at 510 Step 2, the gNB employs prediction, (e.g. optionally using artificial intelligence / machine learning (AI/ML) methods) with input features as CSI, location, mobility and predicts the beam directions as well as number of beams for THz. The gNB prediction includes beam pair prediction information. The beam pair prediction may be performed in a variety of ways. For example, beam pair prediction may optionally use an AI/ML method or may use another technique/method useful for prediction/calculation/estimation purposes. For example, a predictive method using a linear regression, logistic regression, a neural network, a decision tree, a naïve Bayes or other predictive methods may be used for beam pair prediction.
i. The training may include both offline and online stages. The offline training can be employed during the gNB deployment by obtaining dataset D={Xᵢ,Yᵢ}, where Xᵢ's are input features, i.e. CSI, location, mobility; while Yᵢ is the predicted vector, i.e. beam direction and number of beams.
   a. In the online learning phase, the initial predicted vector Yᵢ may be based on the weights trained in the offline phase, which can be updated in the online learning phase with real time data.
   b. As an option, the training data set may also be obtained through simulations, and the initial training can be employed offline using this data set.
ii. To reduce the complexity in the data-driven signature to beamforming mapping procedures, features that capture the CSI, location, mobility may be preferentially extracted, which might represent this information in a lower-dimensional format. In one option, this may be employed using convolutional neural network (CNN). Additionally, the features of CSI, mobility information, location, may also be extracted by the WTRU, to reduce the overhead in the uplink.

In FIG. 5 at 515 Step 3, the gNB transmits SSBs in the direction (also the number of SSBs) as predicted.
i. Based on the mobility information feedback obtained from the WTRU over low frequencies, the gNB may also configure demodulation reference signals (DMRS) of the physical broadcast channel (PBCH), i.e. type and position of DMRS in the SSB block.

Also in FIG. 5 at 515 Step 3, the gNB configures the WTRU using sub-6 GHz or mmWave with the resource-set that includes the beam directions from a pre-determined codebook which is shared offline with both gNB and WTRU. The pair of gNB and WTRU employs a beam search over these potential beams. A codebook includes codewords, where each codeword is a set of candidate beam pairs. Each beam pair carries an SSB. An SSB index is a beam pair index. Indices may indicate multiple SSBs. The gNB also configures the WTRU with the time slot of occurrence of each SSB in the codeword (e.g. SSB index mapping in terms of time slots for the selected SSB beams). Each codeword of the codebook includes beams pertaining to a range of channel conditions. More explicitly, the gNB sends the codeword index/indices that include beams predicted by the gNB as well as the time of occurrence of the SSB indices.

In one example realization of a WTRU, some characteristic description can be as follows. In one example realization, WTRU may have an initial communication in a first frequency range (such as a sub-6 GHz or mmW range) and may determine at least one aspect of SSB configuration associated with a second frequency range (e.g., THz range) via a transmission in the first frequency range (e.g., 6 GHz or mmW). In one solution, the determination may be implicit, for example based on property of transmission in the first frequency range. In another solution, the determination maybe explicit, for example based on indication/control message in the first frequency range. In some solutions, the WTRU may be configured with an association between SSB index and a codebook index. For example, the WTRU may determine the first symbol of candidate SSB on the second frequency range using a reference time instance (or an offset thereof) in a first frequency range. For example, the WTRU may be configured with a WTRU specific SSB burst set configuration (See FIG. 3) possibly different from a common SSB burst set configuration. For example, WTRU may receive the WTRU specific SSB burst set configuration applicable for a second frequency range via a first frequency range. For example, the WTRU specific burst set configuration transmitted from the gNB to the WTRU on the first frequency range may include one or more of the following: the configuration of starting symbol for SSB burst, number of SSBs in a burst, number of SSB bursts, duration of SSB burst, SSB burst periodicity, subcarrier spacing, number of SSB bursts, repetition configuration etc. Possibly the WTRU specific configuration may be associated with a validity period or time window. The WTRU may assume the SSB transmission follows the WTRU specific configuration within that time window. When the WTRU specific SSB burst set time window overlaps with the common SSB burst set configuration, the WTRU may be configured to assume that the common SSB burst set overrides the WTRU specific configuration.

Then the WTRU measures L1-RSRP of each SSB and determines the best beam based on the RSRP threshold.
i. If at least one beam satisfying the threshold is found, WTRU reports the SSB index to gNB over THz or (optional: sub- 6 GHz/mmWave).
ii. If no beam has been identified satisfying the threshold, WTRU feedbacks beam establishment failed flag with beam data report (BDR).
iii. The BDR may comprise of a beam establishment flag indicating failure that no beam has met the pre-configured L1-RSRP threshold, beam indices, and corresponding L1-RSRP values measured at the WTRU.
iv. The BDR configuration to the WTRU can be activated/deactivated by the gNB using L2/MAC control element in the transport channel.
v. The BDR may be trigged:
   a. By WTRU to the gNB using L1/uplink control information (UCI), either periodically or aperiodic with gNB request. The WTRU may autonomously (configured or not) send the BDR to the gNB periodically. The WTRU may send the BDR to the gNB upon gNB's request, where the gNB triggers the BDR using downlink control information (DCI) format 0.
   b. By WTRU to the gNB using L1/UCI, when performance metrics such as L1-RSRP, BER are below preconfigured threshold.
   c. By gNB to the WTRU using DCI format 0, where the gNB configures or signals the WTRU to send the BDR.
   d. By gNB to the WTRU using DCI, for collecting data samples of beam indices and L1-RSRP which may be used for AI training.
vi. The beam establishment failed flag also triggers retraining of the beam predictors, i.e. ML parameters, where beam indices and corresponding L1-RSRP values may be used for retraining.

Returning to FIG. 5, at 520 Step 4, the WTRU measures the L1-RSRP of the best suitable beam and reports it to the gNB. If no beam is found, the WTRU sends a beam establishment failed flag with BDR to the gNB. Given the BDR feedback, the gNB changes beam directions and/or increases the number of beams. FIG. 5 at 525 Step 5, the gNB, based on the feedback with BDR, may increase the beam directions or change the direction and also updates its predictions (i.e. MIL parameters or other prediction parameters). As an option in a worst-case scenario where an updated prediction may not be possible or useful, the gNB may employ exhaustive beam sweeping:
i. In a worst-case scenario, exhaustive beam sweeping can be chosen.
ii. WTRU measures L1-RSRP on the new SSB directions and sends the SSB index to gNB over sub-6 GHz or mmWave.
iii. This feedback from the WTRU indicating the best SSB index may also trigger gNB to updates it predictions (i.e. ML parameters). This is akin to online learning.
iv. In one option, the gNB may also request for retraining ML parameters independently (without reliance on BDR), based on the mobility information and CSI statistics.

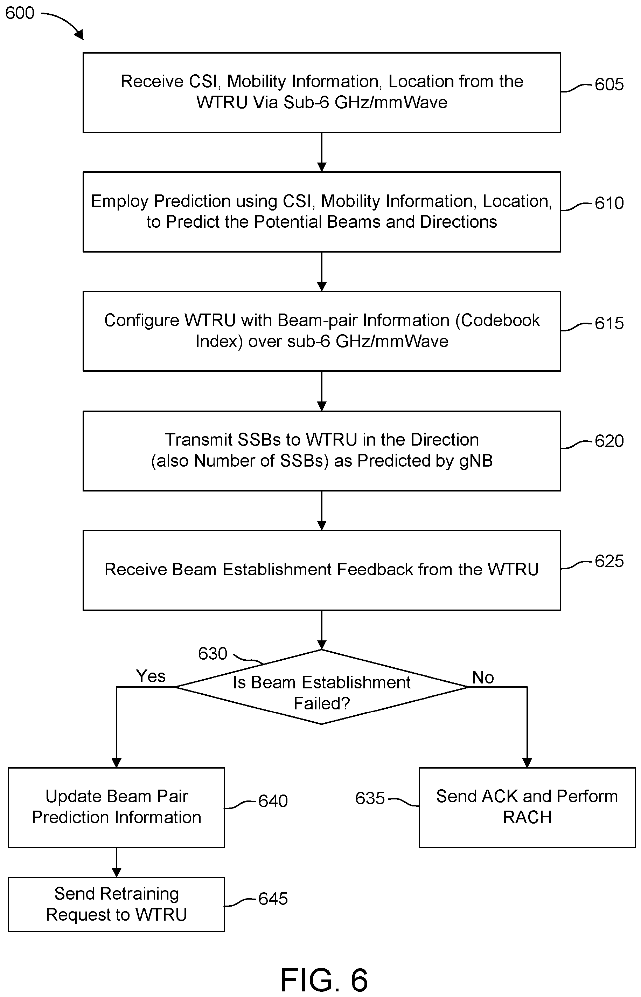

The above principles of FIG. 5 may be used to advantage in the flowchart 600 of the proposed data-driven beam establishment for THz systems from the base station (BS) (e.g. a gNB) perspective as shown in FIG. 6. As expressed above, a NR gNB designation may be used as an example, the gNB may equivalently be considered a BS to allow the method 600 to be utilized in other networks. At step 605, the gNB (e.g. a BS) receives CSI, mobility information, and location information from the WTRU via the first frequency range. That is, via the sub 6 GHz or mmWave frequency band. At 610, the gNB makes or accesses beam pair prediction information using the step 605 information (CSI, mobility information, location information) to predict the potential beam pairs and beam directions to be used in the second frequency band (e.g. a THz band). A beam pair includes an indication of an angle of departure (transmit beam) and an indication of an angle of arrival (receive beam). A beam pair prediction includes indications of the angles of departure and arrival for the transmit and receive beam pairs. The beam pair prediction information may be accessed via a memory location, an index, or other means or may be calculated using the step 605 information. In one embodiment, AI/ML may be used to obtain the prediction. Beam pair prediction information may include the codeword index, which includes the predicted beam-pairs. The size of the codeword determines the number of beam pairs. Multiple codewords indices may also be sent to the WTRU, where each codeword has beam pairs. The WTRU searches for beam pairs that are indicated in these codewords.

At step 615, the gNB may transmit, over the first frequency band (e.g. 6 GHz or mm Wave band) beam configuration information to the WTRU. The beam configuration information may include one or more indications relating to beam pair information to allow the WTRU to use the second frequency band to communicate with the gNB. The gNB may transmit a codebook index or multiple codeword indexes where each codeword has beam pairs. The configuration information may also include time slot information for each beam pair provided. The configuration information sent to the WTRU indicates the beam pair prediction information including relevant beam parameters transmitted to the WTRU at the first frequency band to establish communication with the WTRU using the second frequency band.

At step 620, the gNB transmits SSBs to the WTRU in the second frequency band in the direction of the WTRU. This transmission in the second frequency band is to allow the WTRU to receive the SSB transmissions at the second band and establish communication between the gNB and the WTRU using the information of the SSBs. The SSB information may include the number of SSBs according to the prediction of beam pair information made/predicted by the BS. The SSB information received by the WTRU may include the number of SSB directions and the SSBs direction information as well as the time slot indication for each SSB index received from the gNB.

It is noted that steps 615 and 620 may be reversed in order to establish a communication between the BS and the WTRU at the second frequency bands (e.g. THz band).

At step 625, the BS receives feedback information/indication from the WTRU indicative of a beam establishment at the second frequency band. In one embodiment, a BDR may be received providing the indication of beam establishment. Beam establishment success or failure is tested at step 630. If the beam establishment was successful, the step 635 may be performed and an acknowledge (ACK) may be sent and a random-access channel (RACH) communication may be initiated at the second frequency band. Thus, second frequency band communications may commence between the gNB and the WTRU. If the beam establishment at step 630 is not successful, the gNB at step 640 may perform an update of its beam pair prediction of which beams to select for a communication with the WTRU at the second frequency band. This update of beam pair prediction information (potential beams and beam directions) may be made using ML parameters or may be derived from a BDR received by the gNB. At step 645, a retraining request may be sent to the WTRU based on the updated beam pair prediction information. Retraining generally may occur at the gNB. A retraining request may be sent to WTRU. After retraining is finished, the gNB may retry beam establishment using the updated AI/ML model parameters.

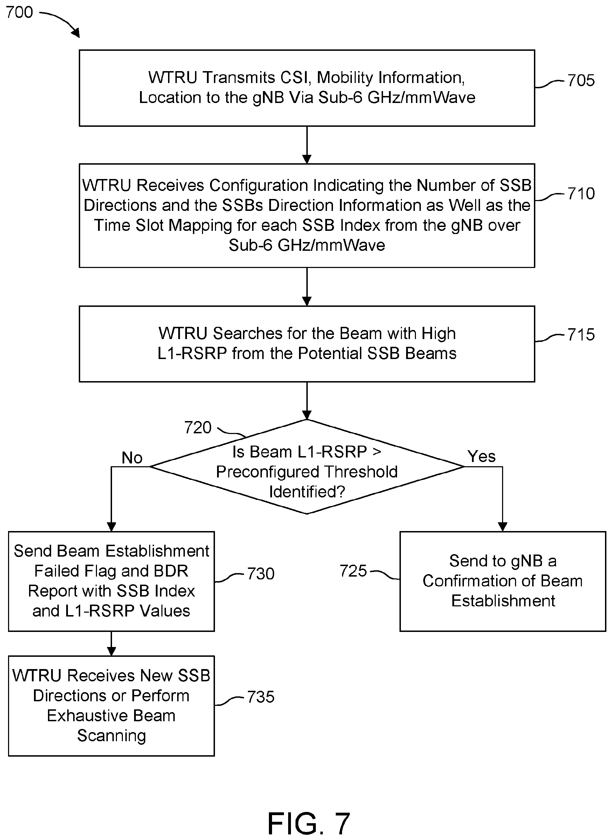

Using the principles of FIG. 5 and FIG. 6 above, an example flowchart 700 of the proposed data-driven beam establishment for THz systems from the WTRU perspective is shown in FIG. 7. As above, the gNB is an example of a base station. At step 705, the WTRU transmits the CSI, mobility information, and location information to the gNB in a first frequency range communication (e.g. sub 6 GHZ or mmWave communication). At step 710, the WTRU receives configuration information in the first frequency range for set-up of the anticipated communication in the second frequency range. The configuration information, received over the first frequency band, may include information relating to beam pairs for communication in the second frequency band. The configuration information received by the WTRU may include the number of SSB directions and the SSBs direction information as well as the time slot mapping for each SSB index received from the gNB over the first frequency range.

Having received the beam configuration information from the gNB, the WTRU at step 715 searches for the beam with high L1-RSRP from the potential beams transmitted by the gNB in the second frequency range (e.g. THz range). At step 720, the WTRU tests/identifies if the beam L1-RSRP is greater than a threshold. If yes, the example method 700 proceeds to step 725 where a confirmation of beam establishment is transmitted by the WTRU. In one embodiment, the confirmation is the WTRU transmitting to the gNB an indication of the established beam having the SSB index with a high L1-RSRP.

If at step 720, the beam L1-RSRP does not meet the threshold for a successful beam establishment in the second frequency band, then the process 700 moves to step 730 and the WTRU may send a beam establishment failed indication (flag) and/or a BDR with at least one SSB index and corresponding L1-RSRP values. At step 735, the WTRU may receive new beam pair prediction information from the gNB. The new beam pair prediction information may include a new SSB direction. In one alternative to sending a new SSB direction, the WTRU may conduct a beam scanning procedure to establish a connection in the second frequency range.

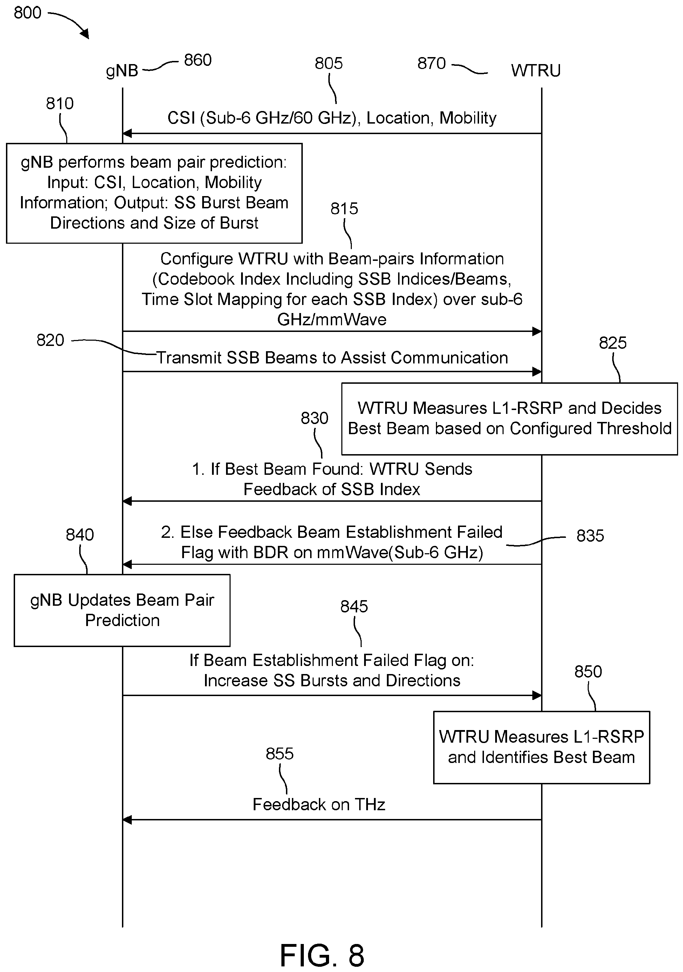

An example signaling diagram between a gNB 860 and a WTRU 870 is shown in FIG. 8. The signaling in FIG. 8 comports with the aspects of FIGs. 5-7. At 805, CSI, location information, and mobility information are transmitted from the WTRU to the gNB (an example of a base station). At 810, the gNB accesses beam pair prediction information as previously described. For example, the gNB can perform beam pair prediction using an input of CSI, location, and mobility information to produce an output of SS burst beam directions, and size of burst information. Optionally, AI/ML may be used for beam-pair prediction. The beam pair prediction information may include synchronization signal burst beam directions and the size of the burst. At 815, the gNB transmits, using the first frequency band, configuration information relating to beam pairs for communication in the second frequency band. Such configuration information may include a codebook index including SSB indices/beams, and time slot mappings for each SSB index. The WTRU searches for beam pairs in the codewords of the codebook index. At 820, the gNB transmits SSB in the second frequency band to assist the WTRU in establishing communications between the gNB and the WTRU in the second frequency band.

At 825, the WTRU uses the transmitted SSBs to attempt to establish a communication on the second communication band by measuring the L1-RSRP and determines a selected beam to use to establish that communication. In one embodiment, the selected beam is one having the highest L1-RSRP of the measured beams. Assuming a beam is found, and a connection is established at the second frequency band, then at 830, the WTRU transmits feedback to the gNB. The feedback may include the SSB index of the selected beam.

Otherwise, if the beam establishment at the second frequency band was unsuccessful. The feedback from the WTRU to the gNB may include a beam establishment failed indication (flag) with a BDR. This failed indication is transmitted on the first frequency band communication link between the WTRU and gNB.

At this point, the gNB may take action at 840 to update the beam pair prediction information in a manner previously discussed. At 845, the gNB may take the action of increasing the synchronization signal bursts and directions transmitted to the WTRU. In response, the WTRU at 850 measures the L1-RSRP of beams candidates at the second frequency band and identifies a selected beam for communication. At 855, feedback to the gNB from the WTRU concerning beam establishment is communicated. Optionally, the feedback may be transmitted via the sub-6 GHz/mm Wave link.

### Data-driven beam tracking/refinement procedures

Once the beam establishment is established, there may be a need for regularly tracking the beam or refining the beam pair. This is because of the rapid fluctuations arising due to movement of users/time-varying channel conditions. In this disclosure, a data-driven beam tracking technique relying on CSI statistics and location information from the WTRU is proposed. More explicitly, using data-driven predictions methods, e.g. such as the use of ML, the gNB predicts the time when the gNB and WTRU pair may be required to refine the beams, the number of CSI-RS and the direction of each CSI-RS required for tracking/refining the beam. In order to improve the robustness of the prediction, the gNB might use the past experience of beam tracking in its predictions.

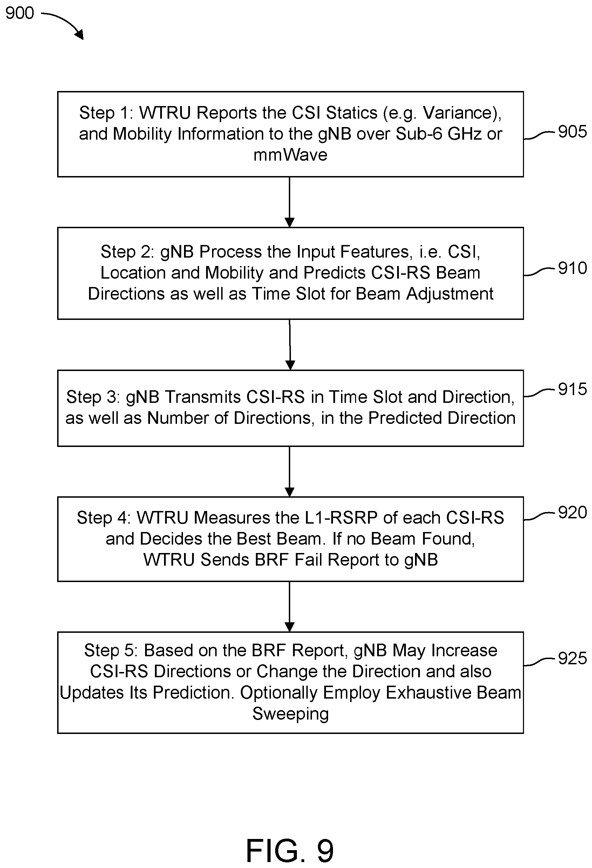

A high-level description of the proposed data-driven beam tracking/refinement for THz systems is summarized in FIG. 9.

In the FIG. 9 flowchart for the example method 900, steps in the data-driven beam tracking/refinement for THz system are resented. In FIG 9, at 905 step 1, the WTRU reports CSI statistics, location (i.e. mobility information, pattem information) to the gNB (an example of a base station) over sub-6 GHz or mmWave or THz links. CSI statistics such as variance, and mobility information can be used in configuring CSI-RS time slot as well as beam directions for tracking beam.

In FIG. 9 at 910 Step 2, the gNB employs prediction using input features as CSI statistics, location, mobility and identifies/predicts the CSI-RS beam directions as well as time slot for beam adjustment/refinement at THz.
i. Training can include both offline and online stages. The offline training is employed during the gNB deployment by obtaining dataset D={Xᵢ, Yᵢ}, where Xᵢ's are input features, i.e. CSI statistics, mobility information; while Yᵢ is the predicted vector, i.e. CSI-RS time slot and CSI-RS beam directions.
ii. As an option, the training data set may also be obtained through simulations, and the initial training can be employed offline using this data set.
iii. To avoid the burden of training arising due to increased dimensionality at the input of the ML, (if ML is used for prediction) features that capture the CSI statistics, location, mobility may be preferentially extracted. This may be employed using convolutional neural network (CNN). The output of the CNN may be used as input to long short-term memory / recurrent neural network (LSTM/RNN). Additionally, the preferred features of CSI statistics, mobility information, location information, may also be extracted by the WTRU, to reduce the overhead in the uplink.

In FIG. 9 at 915 Step 3, the gNB transmits CSI-RS in the time slot and direction in the second (e.g. higher frequency range, such as the THz frequency range) as predicted previously. To further improve the latency, the gNB can also determine the number of CSI-RS directions. In one option, the WTRU may also request the base station, (e.g. a network component, such as a gNB) for beam refinement depending on the observed quality of service (e.g. BER or rate) at the WTRU. rather than the gNB configuring WTRU with the time slot for beam refinement. This request may be made using the second frequency range, such as the higher THz frequency range.

In FIG. 9 at 920 Step 4, the WTRU measures L1-RSRP of each CSI-RS in the configured timeslot and decides the best beam based on the pre-configured L1-RSRP threshold.
i. If at least one beam satisfying the pre-configured threshold is found, WTRU reports the respective beam index to gNB using downlink control information (DCI) signaling.
ii. Then gNB switches to this Tx beam (Tx-side beam-adjustment only).
iii. If no beam has been identified satisfying the threshold, the WTRU sends beam refinement (BRN) report that contains a failure indication, such as a failure flag.
iv. The BRN report may include any one or more of a failure flag, CSI-RS beam indices, and L1-RSRP values.
v. The BRN report with a failure flag also triggers retraining of the prediction at the gNB, where CSI-RS beam indices and corresponding L1-RSRP values may be used for updating the corresponding, i.e. ML, parameters.

In FIG. 9 at 925 Step 5, given the BRN report with a failure flag set, the gNB might increase the CSI-beam directions and/or change the CSI-RS beam directions in the second (e.g. THz) frequency range.
i. In a worst-case scenario, optional exhaustive beam sweeping can be chosen.
ii. WTRU measures L1-RSRP on the new CSI-RS beams and sends the beam index to gNB.
iii. This feedback from the WTRU indicating the best CSI-RS index may also trigger gNB to updates its prediction, i.e. ML parameters.
iv. In one option, the gNB may also request for retraining of the beam pair prediction, i.e. ML parameters independently, based on the mobility information and CSI statistics.
v. In another option, the WTRU may also request the gNB for BRN at the time the WTRU chooses.

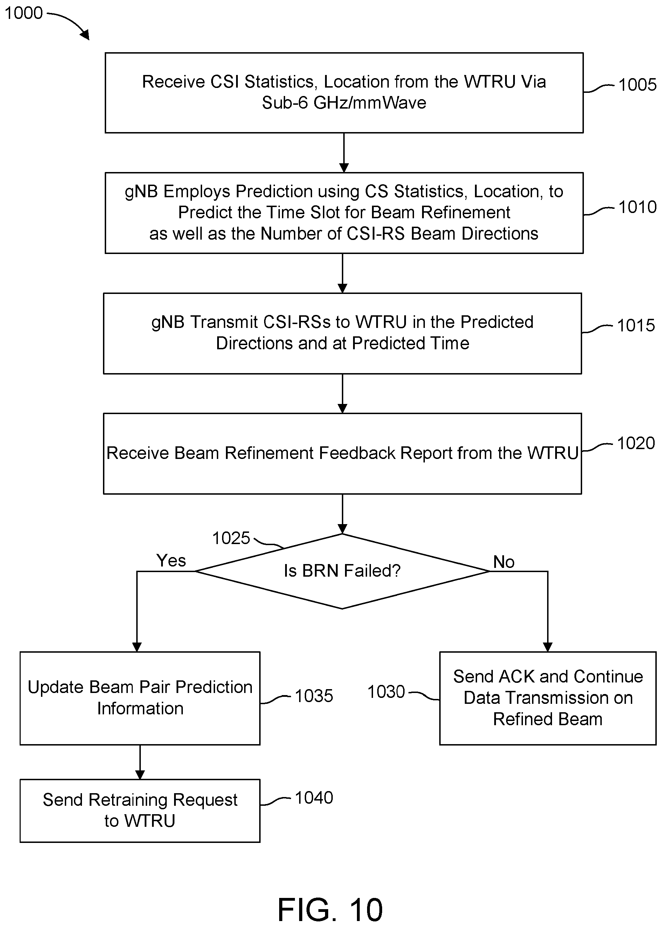

In accordance with FIG. 9, an example data-driven beam tracking/refinement flow diagram 1000 from a gNB perspective is shown in FIG. 10. At step 1005, the gNB (an example of a base station) receives CSI, mobility, and location information from the WTRU via the first frequency range (e.g. 6 GHz or mmWave range). At step 1010, the gNB obtains (calculates or accesses) a beam pair prediction is the CSI, mobility, and location information to predict the time slot for beam refinement as well as the number of CSI-RS beam directions. At step 1015, the gNB transmits the CSI-RS signals to the WTRU in the second frequency band at the predicted directions and the predicted times.

At step 1020, the gNB receives beam refinement feedback from the WTRU. This may be in the form of a beam refinement report (BRN). At step 1025, the BRN is tested and if the BRN indicates a successful beam refinement, then the example process 1000 moves to step 1030 where an ACK is sent from the gNB to the WTRU and use of the refined beam continues. If at step 1025, the BRN indicates a failed beam refinement, then step 1035 may be undertaken where the beam pair prediction is updated. In one option, retraining may be undertaken, or a new beam pair prediction may be made using information from the BRN. In one option, at step 1040, the WTRU may be asked to retrain with information supplied by the gNB.

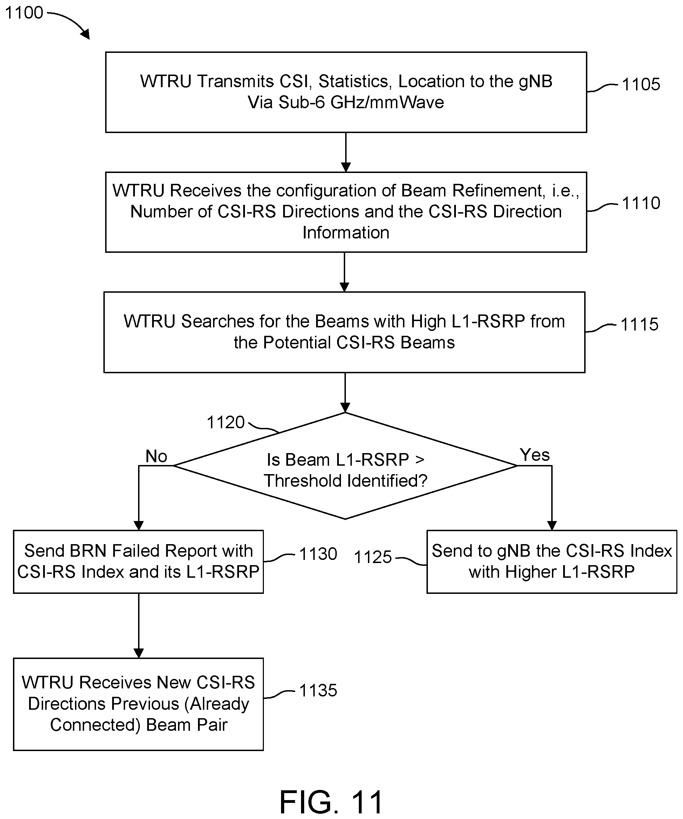

In accordance with FIGs. 9 and 10, an example data-driven beam tracking/refinement flow diagram 1100 from a WTRU perspective is shown in FIG. 11. At step 1105, the WTRU transmits the CSI, mobility, and location information to the gNB (an example of a base station) via the first frequency band (e.g. sub-6 GHz or mmWave) band). At step 1110, the WTRU receives from the gNB configuration information related to a beam refinement. This may include information concerning the number of CSI-RS directions and the CSI-RS direction information relating to the beam refinement. At step 1115, the WTRU searches for the beams at the second frequency band looking for beams with a selected L1-RSRP within the group of new potential beams identified by the gNB. The selected beam may be one with the highest L1-RSRP.

At step 1120, the selected beam is tested to determine if the L1-RSRP is above a threshold value. Assuming the selected new beam is above the threshold L1-RSRP, then the method 1100 moves to step 1125 where the WTRU transmits, in the first frequency band, an indication of the CSI-RS index of the selected beam that has the acceptable L1 RSRP value indication. If however, the selected beam does not have an L1-RSRP value greater than a threshold at step 1120, then the method 1100 moves to step 1130, where a failed BRN is transmitted to the gNB. The BRN may include one or more of the CSI-RS indexes and corresponding L1-RSRPs. After some processing by the gNB, the WTRU may, at step 1135, receive new CSI-RS directions or continue transmission on the beam pair that is already connected in the second frequency range.

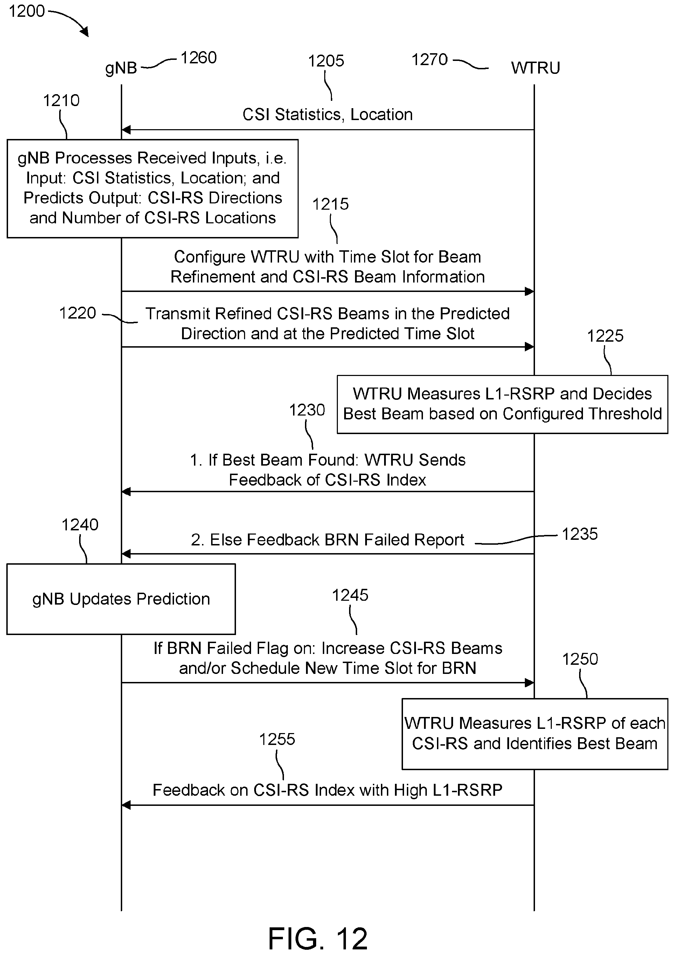

A signaling diagram 1200 of an example data-driven CSI-RS based beam tracking/refinement between a gNB 1260 and a WTRU 1270 is shown in FIG. 12. The signaling in FIG. 12 comports with the aspects of FIGs. 9-11. At 1205, CSI, mobility information, and location information are provided by the WTRU to the gNB (an example of a base station). At 1210, the gNB processes the received CSI statistics and location information and obtains (calculates or accesses) new beam pair prediction information for continued operation of the gNB and WTRU in the second frequency band (e.g. THz band). The new beam pair prediction information is a refinement of the existing beam configuration information and may include CSI-RS direction and number of CSI-RS locations. At 1215, the gNB transmits beam configuration information to the WTRU that refines the existing beam used in the second frequency band for communication between the gNb and the WTRU. The new beam configuration information includes the time slot for the beam refinement and any updated CSI-RS beam information. This refined information is transmitted to the WTRU on the first frequency band. At 1220, the gNB transmits refined CSI-RS beams in the second frequency band using the refined direction and the refined time slot resulting from the beam prediction obtained by the gNB.

At 1225, the WTRU receives the updated beam configuration information and measures L1-RSRP to determine a selected beam. The selected beam may be based on a threshold value for a successful beam update or refinement. Assuming that a successful refinement of the second frequency range beam is determined, then at step 1230, the WTRU transmits feedback to the gNB indicating a successful update of the communication on the second frequency band. Such an indication may be in indication of the selected CSI-RS index. However, if the attempt to update the existing communication using the second frequency band failed, then the WTRU may send to the gNB a BRN with a fail indication at 1235. Upon reception of the failed BRN report with a failure indication, the gNB at 1240 updates the beam pair prediction using procedures such as AI/ML and/or a derivation from the BDR. At 1245, the gNB may take action based on the failure indication in the BRN. That action may include increasing the number of CSI-RS beams and or scheduling of a new time slot.

At 1250, the WTRU may receive updated configuration information and undertake measurements of each CSI-RS and identify a selected (best) beam that has an acceptable L1-RSRP. At 1255, the WTRU may transmit feedback to the gNB that may include the CSI-RS index of the selected beam for continued communication on the second frequency range.

Features of the disclosure herein include but are not limited to a base station (BS) apparatus and an example method performed by the BS. The example method includes receiving, from a wireless transmit receive unit (WTRU) via a communication in a first frequency band, channel state information (CSI) location information, and mobility information. The BS determines beam pair prediction information including one or more beam pair information to establish a communication in a second frequency band between the base station and the WTRU based on the CSI, location information, and mobility information. The communication in the second frequency band occurs at a higher frequency band than the communication in the first frequency band. The BS transmits, to the WTRU in the first frequency band, configuration information relating to the beam pair prediction information for communication in the second frequency band, wherein the configuration information includes a codeword index and time slot information for each beam pair. The BS transmits, in the second frequency band, at least one synchronization signal block according to the beam pair prediction information. The BS receives feedback from the WTRU, and the BS performs one of transmitting an acknowledge to the WTRU or updates the beam pair prediction information based on the feedback.

Receiving the CSI, location information, and mobility information from the WTRU includes receiving a spatial signature of the WTRU operating in the first frequency band. Determining beam pair prediction information includes determining beam direction and a number of beam pairs for the communication in the second frequency band. In one embodiment, determining beam pair prediction information includes performing a prediction of beam pair information using a machine learning technique.

The communication in the first frequency band occurs in a sub-6 GHz frequency band and the communication in the second frequency band occurs in a THz frequency band. The action of transmitting, to the WTRU in the first frequency band, configuration information relating to beam pairs for communication in the second frequency band includes the BS transmitting configuration information including at least one codeword index having at least one codeword where a codeword indicates a beam pair.

The BS receives feedback from the WTRU may include the base station transmitting to the WTRU a request for a beam data report (BDR) and receiving the BDR from the WTRU. Receiving feedback from the WTRU may include receiving a SSB index of a beam supporting the communication in the second frequency band. Receiving feedback from the WTRU may include the BS receiving from the WTRU an indication of beam establishment failure that is received in the first frequency band.

The features also include a computer-readable storage medium comprising instructions which when executed by a computer cause the computer to carry out any of the methods described herein.

Although the features and elements of the present invention are described in the preferred embodiments in particular combinations, each feature or element can be used alone without the other features and elements of the preferred embodiments or in various combinations with or without other features and elements of the present invention. Although the solutions described herein consider New Radio (NR), 5G or LTE, LTE-A specific, it is understood that the solutions described herein are not restricted to this scenario and are applicable to other wireless systems as well.

### Conclusion

Although features and elements are provided above in particular combinations, one of ordinary skill in the art will appreciate that each feature or element can be used alone or in any combination with the other features and elements. The present disclosure is not to be limited in terms of the particular embodiments described in this application, which are intended as illustrations of various aspects. Many modifications and variations may be made without departing from its scope, as will be apparent to those skilled in the art. No element, act, or instruction used in the description of the present application should be construed as critical or essential to the invention unless explicitly provided as such. Such modifications and variations are intended to fall within the scope of the appended claims. The present disclosure is to be limited only by the terms of the appended claims. It is to be understood that this disclosure is not limited to particular methods or systems.

The foregoing embodiments are discussed, for simplicity, with regard to the terminology and structure of infrared capable devices, i.e., infrared emitters and receivers. However, the embodiments discussed are not limited to these systems but may be applied to other systems that use other forms of electromagnetic waves or non-electromagnetic waves such as acoustic waves.

It is also to be understood that the terminology used herein is for the purpose of describing particular embodiments only, and is not intended to be limiting. As used herein, the term "video" or the term "imagery" may mean any of a snapshot, single image and/or multiple images displayed over a time basis. As another example, when referred to herein, the terms "user equipment" and its abbreviation "UE", the term "remote" and/or the terms "head mounted display" or its abbreviation "HMD" may mean or include (i) a wireless transmit and/or receive unit (WTRU); (ii) any of a number of embodiments of a WTRU; (iii) a wireless-capable and/or wired-capable (e.g., tetherable) device configured with, inter alia, some or all structures and functionality of a WTRU; (iii) a wireless-capable and/or wired-capable device configured with less than all structures and functionality of a WTRU; or (iv) the like. Details of an example WTRU, which may be representative of any WTRU recited herein, are provided herein with respect to FIGs. 1A-1D. As another example, various disclosed embodiments herein *supra* and *infra* are described as utilizing a head mounted display. Those skilled in the art will recognize that a device other than the head mounted display may be utilized and some or all of the disclosure and various disclosed embodiments can be modified accordingly without undue experimentation. Examples of such other device may include a drone or other device configured to stream information for providing the adapted reality experience.

In addition, the methods provided herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

Variations of the method, apparatus and system provided above are possible without departing from the scope of the invention. In view of the wide variety of embodiments that can be applied, it should be understood that the illustrated embodiments are examples only, and should not be taken as limiting the scope of the following claims. For instance, the embodiments provided herein include handheld devices, which may include or be utilized with any appropriate voltage source, such as a battery and the like, providing any appropriate voltage.

Moreover, in the embodiments provided above, processing platforms, computing systems, controllers, and other devices that include processors are noted. These devices may include at least one Central Processing Unit ("CPU") and memory. In accordance with the practices of persons skilled in the art of computer programming, reference to acts and symbolic representations of operations or instructions may be performed by the various CPUs and memories. Such acts and operations or instructions may be referred to as being "executed," "computer executed" or "CPU executed."

One of ordinary skill in the art will appreciate that the acts and symbolically represented operations or instructions include the manipulation of electrical signals by the CPU. An electrical system represents data bits that can cause a resulting transformation or reduction of the electrical signals and the maintenance of data bits at memory locations in a memory system to thereby reconfigure or otherwise alter the CPU's operation, as well as other processing of signals. The memory locations where data bits are maintained are physical locations that have particular electrical, magnetic, optical, or organic properties corresponding to or representative of the data bits. It should be understood that the embodiments are not limited to the above-mentioned platforms or CPUs and that other platforms and CPUs may support the provided methods.

The data bits may also be maintained on a computer readable medium including magnetic disks, optical disks, and any other volatile (e.g., Random Access Memory (RAM)) or non-volatile (e.g., Read-Only Memory (ROM)) mass storage system readable by the CPU. The computer readable medium may include cooperating or interconnected computer readable medium, which exist exclusively on the processing system or are distributed among multiple interconnected processing systems that may be local or remote to the processing system. It should be understood that the embodiments are not limited to the above-mentioned memories and that other platforms and memories may support the provided methods.

In an illustrative embodiment, any of the operations, processes, etc. described herein may be implemented as computer-readable instructions stored on a computer-readable medium. The computer-readable instructions may be executed by a processor of a mobile unit, a network element, and/or any other computing device.

There is little distinction left between hardware and software implementations of aspects of systems. The use of hardware or software is generally (but not always, in that in certain contexts the choice between hardware and software may become significant) a design choice representing cost versus efficiency tradeoffs. There may be various vehicles by which processes and/or systems and/or other technologies described herein may be effected (e.g., hardware, software, and/or firmware), and the preferred vehicle may vary with the context in which the processes and/or systems and/or other technologies are deployed. For example, if an implementer determines that speed and accuracy are paramount, the implementer may opt for a mainly hardware and/or firmware vehicle. If flexibility is paramount, the implementer may opt for a mainly software implementation. Alternatively, the implementer may opt for some combination of hardware, software, and/or firmware.

The foregoing detailed description has set forth various embodiments of the devices and/or processes via the use of block diagrams, flowcharts, and/or examples. Insofar as such block diagrams, flowcharts, and/or examples include one or more functions and/or operations, it will be understood by those within the art that each function and/or operation within such block diagrams, flowcharts, or examples may be implemented, individually and/or collectively, by a wide range of hardware, software, firmware, or virtually any combination thereof. In an embodiment, several portions of the subject matter described herein may be implemented via Application Specific Integrated Circuits (ASICs), Field Programmable Gate Arrays (FPGAs), digital signal processors (DSPs), and/or other integrated formats. However, those skilled in the art will recognize that some aspects of the embodiments disclosed herein, in whole or in part, may be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, and that designing the circuitry and/or writing the code for the software and or firmware would be well within the skill of one of skill in the art in light of this disclosure. In addition, those skilled in the art will appreciate that the mechanisms of the subject matter described herein may be distributed as a program product in a variety of forms, and that an illustrative embodiment of the subject matter described herein applies regardless of the particular type of signal bearing medium used to actually carry out the distribution. Examples of a signal bearing medium include, but are not limited to, the following: a recordable type medium such as a floppy disk, a hard disk drive, a CD, a DVD, a digital tape, a computer memory, etc., and a transmission type medium such as a digital and/or an analog communication medium (e.g., a fiber optic cable, a waveguide, a wired communications link, a wireless communication link, etc.).

Those skilled in the art will recognize that it is common within the art to describe devices and/or processes in the fashion set forth herein, and thereafter use engineering practices to integrate such described devices and/or processes into data processing systems. That is, at least a portion of the devices and/or processes described herein may be integrated into a data processing system via a reasonable amount of experimentation. Those having skill in the art will recognize that a typical data processing system may generally include one or more of a system unit housing, a video display device, a memory such as volatile and non-volatile memory, processors such as microprocessors and digital signal processors, computational entities such as operating systems, drivers, graphical user interfaces, and applications programs, one or more interaction devices, such as a touch pad or screen, and/or control systems including feedback loops and control motors (e.g., feedback for sensing position and/or velocity, control motors for moving and/or adjusting components and/or quantities). A typical data processing system may be implemented utilizing any suitable commercially available components, such as those typically found in data computing/communication and/or network computing/communication systems.

The herein described subject matter sometimes illustrates different components included within, or connected with, different other components. It is to be understood that such depicted architectures are merely examples, and that in fact many other architectures may be implemented which achieve the same functionality. In a conceptual sense, any arrangement of components to achieve the same functionality is effectively "associated" such that the desired functionality may be achieved. Hence, any two components herein combined to achieve a particular functionality may be seen as "associated with" each other such that the desired functionality is achieved, irrespective of architectures or intermedial components. Likewise, any two components so associated may also be viewed as being "operably connected", or "operably coupled", to each other to achieve the desired functionality, and any two components capable of being so associated may also be viewed as being "operably couplable" to each other to achieve the desired functionality. Specific examples of operably couplable include but are not limited to physically mateable and/or physically interacting components and/or wirelessly interactable and/or wirelessly interacting components and/or logically interacting and/or logically interactable components.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, where only one item is intended, the term "single" or similar language may be used. As an aid to understanding, the following appended claims and/or the descriptions herein may include usage of the introductory phrases "at least one" and "one or more" to introduce claim recitations. However, the use of such phrases should not be construed to imply that the introduction of a claim recitation by the indefinite articles "a" or "an" limits any particular claim including such introduced claim recitation to embodiments including only one such recitation, even when the same claim includes the introductory phrases "one or more" or "at least one" and indefinite articles such as "a" or "an" (e.g., "a" and/or "an" should be interpreted to mean "at least one" or "one or more"). The same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B." Further, the terms "any of" followed by a listing of a plurality of items and/or a plurality of categories of items, as used herein, are intended to include "any of," "any combination of," "any multiple of," and/or "any combination of multiples of" the items and/or the categories of items, individually or in conjunction with other items and/or other categories of items. Moreover, as used herein, the term "set" is intended to include any number of items, including zero. Additionally, as used herein, the term "number" is intended to include any number, including zero. And the term "multiple", as used herein, is intended to be synonymous with "a plurality".

In addition, where features or aspects of the disclosure are described in terms of Markush groups, those skilled in the art will recognize that the disclosure is also thereby described in terms of any individual member or subgroup of members of the Markush group.

As will be understood by one skilled in the art, for any and all purposes, such as in terms of providing a written description, all ranges disclosed herein also encompass any and all possible subranges and combinations of subranges thereof. Any listed range can be easily recognized as sufficiently describing and enabling the same range being broken down into at least equal halves, thirds, quarters, fifths, tenths, etc. As a non-limiting example, each range discussed herein may be readily broken down into a lower third, middle third and upper third, etc. As will also be understood by one skilled in the art all language such as "up to," "at least," "greater than," "less than," and the like includes the number recited and refers to ranges which can be subsequently broken down into subranges as discussed above. Finally, as will be understood by one skilled in the art, a range includes each individual member. Thus, for example, a group having 1-3 cells refers to groups having 1, 2, or 3 cells. Similarly, a group having 1-5 cells refers to groups having 1, 2, 3, 4, or 5 cells, and so forth.

Moreover, the claims should not be read as limited to the provided order or elements unless stated to that effect.

## Claims

1. A method performed by a base station, the method comprising:
receiving, from a wireless transmit receive unit, WTRU, via a communication in a first frequency band, channel state information, CSI, location information, and mobility information;
determining beam pair prediction information including one or more beam pair information to establish a communication in a second frequency band between the base station and the WTRU based on the received information, wherein the communication in the second frequency band occurs at a higher frequency band than the communication in the first frequency band;
transmitting, to the WTRU in the first frequency band, configuration information relating to the beam pair prediction information for communication in the second frequency band;
transmitting, in the second frequency band, at least one synchronization signal block according to the beam pair prediction information;
receiving feedback from the WTRU; and
performing one of transmitting an acknowledge to the WTRU or updating the beam pair prediction information based on the feedback.

2. The method of claim 1, wherein determining the beam pair prediction information comprises determining beam direction and number of beam pairs for the communication in the second frequency band.

3. The method of any preceding claim, wherein receiving via the communication in the first frequency band comprises receiving the communication in the first frequency band occurring in a sub-6 GHz frequency band and wherein the communication in the second frequency band is occurring in a THz frequency band.

4. The method of any preceding claim, wherein transmitting, to the WTRU in the first frequency band, the configuration information for communication in the second frequency band comprises the base station transmitting configuration information relating to the beam pair prediction information including a codeword index having at least one codeword indicating a beam pair.

5. The method of any preceding claim, wherein receiving the feedback from the WTRU comprises the base station transmitting to the WTRU a request for a beam data report, BDR, and receiving the BDR from the WTRU.

6. The method of any preceding claim, wherein receiving the feedback from the WTRU comprises receiving a synchronization signal block index of a beam supporting the communication in the second frequency band.

7. The method of any preceding claim, wherein receiving the feedback from the WTRU comprises the base station receiving from the WTRU an indication of beam establishment failure received in the first frequency band.

8. A base station apparatus comprising circuitry including a transmitter, a receiver, a processor, and memory, the base station apparatus configured to:
receive, from a wireless transmit receive unit, WTRU, via a communication in a first frequency band, channel state information, CSI, location information, and mobility information;
determine beam pair prediction information including one or more beam pair information to establish a communication in a second frequency band between the base station and the WTRU based on the received information, wherein the communication in the second frequency band occurs at a higher frequency band than the communication in the first frequency band;
transmit, to the WTRU in the first frequency band, configuration information relating to the beam pair prediction information for communication in the second frequency band;
transmit, in the second frequency band, at least one synchronization signal block according to the beam pair prediction information;
receive feedback from the WTRU; and
perform one of transmit an acknowledge to the WTRU or update the beam pair prediction information based on the feedback.

9. The base station apparatus of claim 8, wherein the beam pair prediction information comprises beam direction and number of beam pairs for the communication in the second frequency band.

10. The base station apparatus of any of claims 8-9, wherein the communication in the first frequency band occurs in a sub-6 GHz frequency band and the communication in the second frequency band occurs in a THz frequency band.

11. The base station apparatus of any of claims 8-10, wherein the configuration information for communication in the second frequency band comprises the configuration information relating to the beam pair prediction information including a codeword index having at least one codeword indicating a beam pair.

12. The base station apparatus of any of claims 8-11, wherein the feedback from the WTRU comprises a beam data report, BDR received from the WTRU subsequent to receiving a BDR activation request from the base station.

13. The base station apparatus of any of claims 8-12, wherein the feedback from the WTRU comprises a synchronization signal block index of a beam supporting the communication in the second frequency band.

14. The base station apparatus of any of claims 8-13, wherein the feedback from the WTRU comprises an indication of beam establishment failure received in the first frequency band.

15. A computer-readable storage medium comprising instructions which when executed by a computer cause the computer to carry out the method of any of claims 1 to 7.

## Patentansprüche

1. Verfahren, das eine Basisstation durchführt, das Verfahren umfassend:
Empfangen von Kanalstatusinformationen, CSI, Standortinformationen und Mobilitätsinformationen, von einer drahtlosen Übertragungs- und Empfangseinheit, WTRU, über eine Kommunikation in einem ersten Frequenzband;
Bestimmen von Strahlenpaar-Vorhersageinformationen, einschließlich einer oder mehrerer Strahlenpaar-Informationen, um eine Kommunikation in einem zweiten Frequenzband zwischen der Basisstation und der WTRU auf Grundlage der empfangenen Informationen herzustellen, wobei die Kommunikation in dem zweiten Frequenzband in einem höheren Frequenzband erfolgt als die Kommunikation in dem ersten Frequenzband;
Übertragen, an die WTRU in dem ersten Frequenzband, von Konfigurationsinformationen in Bezug auf die Strahlenpaar-Vorhersageinformationen für die Kommunikation in dem zweiten Frequenzband;
Übertragen, in dem zweiten Frequenzband, von mindestens einem Synchronisierungssignalblock gemäß den Strahlenpaar-Vorhersageinformationen;
Empfangen von Feedback von der WTRU; und
Durchführen von einem vom Übertragen einer Quittierung an die WTRU oder Aktualisieren der Strahlenpaar-Vorhersageinformationen auf Grundlage des Feedbacks.

2. Verfahren nach Anspruch 1, wobei das Bestimmen der Strahlenpaar-Vorhersageinformationen umfasst, eine Strahlenrichtung und eine Anzahl von Strahlenpaaren für die Kommunikation in dem zweiten Frequenzband zu bestimmen.

3. Verfahren nach einem der vorstehenden Ansprüche, wobei das Empfangen über die Kommunikation in dem ersten Frequenzband umfasst, die Kommunikation in dem ersten Frequenzband in einem Sub-6-GHz-Frequenzband zu empfangen, und wobei die Kommunikation in dem zweiten Frequenzband in einem THz-Frequenzband erfolgt.

4. Verfahren nach einem der vorstehenden Ansprüche, wobei das Übertragen der Konfigurationsinformationen an die WTRU in dem ersten Frequenzband, für die Kommunikation in dem zweiten Frequenzband, umfasst, dass die Basisstation Konfigurationsinformationen in Bezug auf die Strahlenpaar-Vorhersageinformationen, einschließlich eines Codewort-Index mit mindestens einem Codewort, das ein Strahlenpaar angibt, überträgt.

5. Verfahren nach einem der vorstehenden Ansprüche, wobei das Empfangen von Feedback von der WTRU umfasst, dass die Basisstation an die WTRU eine Anfrage für einen Strahlendatenbericht, BDR, überträgt und den BDR von der WTRU empfängt.

6. Verfahren nach einem der vorstehenden Ansprüche, wobei das Empfangen von Feedback von der WTRU umfasst, einen Synchronisierungssignalblock-Index von einem Strahl zu empfangen, der die Kommunikation in dem zweiten Frequenzband unterstützt.

7. Verfahren nach einem der vorstehenden Ansprüche, wobei das Empfangen von Feedback von der WTRU umfasst, dass die Basisstation von der WTRU eine Angabe über das Scheitern der Herstellung eines Strahls empfängt, die in dem ersten Frequenzband empfangen wird.

8. Basisstationsvorrichtung, eine Schaltung umfassend, die einen Transmitter, einen Empfänger, einen Prozessor und einen Speicher einschließt, wobei die Basisstationsvorrichtung für Folgendes konfiguriert ist:
Empfangen von Kanalstatusinformationen, CSI, Standortinformationen und Mobilitätsinformationen, von einer drahtlosen Übertragungs- und Empfangseinheit, WTRU, über eine Kommunikation in einem ersten Frequenzband;
Bestimmen von Strahlenpaar-Vorhersageinformationen, einschließlich, einer oder mehrerer Strahlenpaar-Informationen, um eine Kommunikation in einem zweiten Frequenzband zwischen der Basisstation und der WTRU auf Grundlage der empfangenen Informationen herzustellen, wobei die Kommunikation in dem zweiten Frequenzband in einem höheren Frequenzband erfolgt als die Kommunikation in dem ersten Frequenzband;
Übertragen, an die WTRU in dem ersten Frequenzband, von Konfigurationsinformationen in Bezug auf die Strahlenpaar-Vorhersageinformationen für die Kommunikation in dem zweiten Frequenzband;
Übertragen, in dem zweiten Frequenzband, von mindestens einem Synchronisierungssignalblock gemäß den Strahlenpaar-Vorhersageinformationen;
Empfangen von Feedback von der WTRU; und
Durchführen von einem vom Übertragen einer Quittierung an die WTRU oder Aktualisieren der Strahlenpaar-Vorhersageinformationen auf Grundlage des Feedbacks.

9. Basisstationsvorrichtung nach Anspruch 8, wobei die Strahlenpaar-Vorhersageinformationen eine Strahlenrichtung und eine Anzahl von Strahlenpaaren für die Kommunikation in dem zweiten Frequenzband umfassen.

10. Basisstationsvorrichtung nach einem der Ansprüche 8-9, wobei die Kommunikation in dem ersten Frequenzband in einem Sub-6-GHz-Frequenzband erfolgt und die Kommunikation in dem zweiten Frequenzband in einem THz-Frequenzband erfolgt.

11. Basisstationsvorrichtung nach einem der Ansprüche 8-10, wobei die Konfigurationsinformationen für die Kommunikation in dem zweiten Frequenzband die Konfigurationsinformationen in Bezug auf die Strahlenpaar-Vorhersageinformationen, einschließlich eines Codewort-Index mit mindestens einem Codewort, das ein Strahlenpaar angibt, umfasst.

12. Basisstationsvorrichtung nach einem der Ansprüche 8-11, wobei das Feedback von der WTRU einen Strahlendatenbericht, BDR, der von der WTRU nach Erhalt einer Anfrage zur BDR-Aktivierung von der Basisstation empfangen wird, umfasst.

13. Basisstationsvorrichtung nach einem der Ansprüche 8-12, wobei das Feedback von der WTRU einen Synchronisierungssignalblock-Index von einem Strahl umfasst, der die Kommunikation in dem zweiten Frequenzband unterstützt.

14. Basisstationsvorrichtung nach einem der Ansprüche 8-13, wobei das Feedback von der WTRU eine Angabe über das Scheitern der Herstellung eines Strahls, die in dem ersten Frequenzband empfangen wird, umfasst.

15. Computerlesbares Speichermedium, das Anweisungen umfasst, die bei Ausführung durch einen Computer den Computer veranlassen, das Verfahren nach einem der Ansprüche 1 bis 7 durchzuführen.

## Revendications

1. Procédé réalisé par une station de base, le procédé comprenant les étapes consistant à :
recevoir, à partir d'une unité d'émission-réception sans fil, ou WTRU, par l'intermédiaire d'une communication dans une première bande de fréquence, d'informations d'état de canal, ou CSI, d'informations d'emplacement et d'informations de mobilité ;
déterminer des informations de prévision de paire de faisceaux incluant une ou plusieurs informations de paire de faisceaux pour établir une communication dans une seconde bande de fréquence entre la station de base et la WTRU en se basant sur les informations reçues, dans lequel la communication dans la seconde bande de fréquence se produit au niveau d'une bande de fréquence plus haute que la communication dans la première bande de fréquence ;
émettre, vers la WTRU dans la première bande de fréquence, des informations de configuration liées aux informations de prévision de paire de faisceaux pour la communication dans la seconde bande de fréquence ;
émettre, dans la seconde bande de fréquences, au moins un bloc de signal de synchronisation conformément aux informations de prévision de paire de faisceaux ;
recevoir un retour à partir de la WTRU ; et
réaliser une étape parmi émettre une confirmation à la WTRU ou mettre à jour les informations de prévision de paire de faisceaux en se basant sur le retour.

2. Procédé selon la revendication 1, dans lequel l'étape consistant à déterminer les informations de prévision de paire de faisceaux comprend une étape consistant à déterminer une direction de faisceau et un nombre de paires de faisceau pour la communication dans la seconde bande de fréquence.

3. Procédé selon l'une quelconque des revendications précédentes, dans lequel l'étape consistant à recevoir par l'intermédiaire de la communication dans la première bande de fréquence comprend une étape consistant à recevoir la communication dans la première bande de fréquence se produisant dans une bande de fréquence en dessous de 6 GHz et dans lequel la communication dans la seconde bande de fréquences se produit dans une bande de fréquence de l'ordre du THz.

4. Procédé selon l'une quelconque des revendications précédentes, dans lequel l'étape consistant à émettre, vers la WTRU dans la première bande de fréquence, les informations de configuration pour la communication dans la seconde bande de fréquence comprend la station de base émettant des informations de configuration liées aux informations de prévision de paire de faisceaux incluant un index de noms de code ayant au moins un nom de code indiquant une paire de faisceaux.

5. Procédé selon l'une quelconque des revendications précédentes, dans lequel l'étape consistant à recevoir le retour à partir de la WTRU comprend la station de base émettant vers la WTRU une requête pour un rapport de données de faisceau, ou BDR, et recevant le BDR à partir de la WTRU.

6. Procédé selon l'une quelconque des revendications précédentes, dans lequel l'étape consistant à recevoir le retour à partir de la WTRU comprend une étape consistant à recevoir un index de blocs de signal de synchronisation d'un faisceau soutenant la communication dans la seconde bande de fréquence.

7. Procédé selon l'une quelconque des revendications précédentes, dans lequel l'étape consistant à recevoir le retour à partir de la WTRU comprend la station de base recevant depuis la WTRU une indication d'un échec d'établissement de faisceau reçue dans la première bande de fréquence.

8. Appareil de station de base comprenant un circuit incluant un émetteur, un récepteur, un processeur et une mémoire, l'appareil de station de base étant configuré pour :
recevoir, à partir d'une unité d'émission-réception sans fil, ou WTRU, par l'intermédiaire d'une communication dans une première bande de fréquence, d'informations d'état de canal, ou CSI, d'informations d'emplacement et d'informations de mobilité ;
déterminer des informations de prévision de paire de faisceaux incluant une ou plusieurs informations de paire de faisceaux pour établir une communication dans une seconde bande de fréquence entre la station de base et la WTRU en se basant sur les informations reçues, dans lequel la communication dans la seconde bande de fréquence se produit au niveau d'une bande de fréquence plus haute que la communication dans la première bande de fréquence ;
émettre, vers la WTRU dans la première bande de fréquence, des informations de configuration liées aux informations de prévision de paire de faisceaux pour la communication dans la seconde bande de fréquence ;
émettre, dans la seconde bande de fréquence, au moins un bloc de signal de synchronisation conformément aux informations de prévision de paire de faisceaux ;
recevoir un retour à partir de la WTRU ; et
réaliser une étape parmi émettre une confirmation à la WTRU ou mettre à jour les informations de prévision de paire de faisceaux en se basant sur le retour.

9. Appareil de station de base selon la revendication 8, dans lequel les informations de prévision de paire de faisceaux comprennent une direction de faisceau et un nombre de paires de faisceaux pour la communication dans la seconde bande de fréquence.

10. Appareil de station de base selon l'une quelconque des revendications 8 à 9, dans lequel la communication dans la première de fréquence se produit dans une bande de fréquence en dessous de 6 GHz et dans lequel la communication dans la seconde bande de fréquence se produit dans une bande de fréquence de l'ordre du THz.

11. Appareil de station de base selon l'une quelconque des revendications 8 à 10, dans lequel les informations de configuration pour la communication dans la seconde bande de fréquence comprend les informations de configuration liées aux informations de prévision de paire de faisceaux incluant un index de noms de code ayant au moins un nom de code indiquant une paire de faisceaux.

12. Appareil de station de base selon l'une quelconque des revendications 8 à 11, dans lequel le retour à partir de la WTRU comprend un rapport de données de faisceau, ou BDR, reçu à partir de la WTRU après avoir reçu une requête d'activation de BDR à partir de la station de base.

13. Appareil de station de base selon l'une quelconque des revendications 8 à 12, dans lequel le retour à partir de la WTRU comprend un index de blocs de signal de synchronisation d'un faisceau soutenant la communication dans la seconde bande de fréquence.

14. Appareil de station de base selon l'une quelconque des revendications 8 à 13, dans lequel le retour à partir de la WTRU comprend une indication d'un échec d'établissement de faisceau reçue dans la première bande de fréquence.

15. Support de stockage lisible par ordinateur comprenant des instructions qui, lorsqu'elles sont exécutées par un ordinateur, amènent l'ordinateur à mettre en œuvre le procédé selon l'une quelconque des revendications 1 à 7.
